# EUROPEAN PATENT SPECIFICATION

(11) **EP 2 390 515 B1**
(45) Date of publication and mention of the grant of the patent: **24.04.2013**
(21) Application number: 11167088.1
(22) Date of filing: 23.05.2011
(51) Int. Cl.: F16B 37/02, F16B 37/04, F16B 41/00

(54) **Fixing device**
Fixiervorrichtung
Dispositif de fixation

(30) Priority: 24.05.2010 JP 2010118353; 24.05.2010 JP 2010118354
(43) Date of publication of application: 30.11.2011
(73) Proprietor: Mitsumi Electric Co., Ltd., Tama-shi Tokyo (JP)
(72) Inventor: Miura, Tomoaki, Tokyo (JP); Sato, Kyuichi, Tokyo (JP)
(74) Representative: Solf, Alexander

(56) References cited:
- WO-A2-03/021112
- GB-A- 613 974
- US-A- 2 303 148
- US-A- 4 606 688

## Description

### BACKGROUND OF THE INVENTION

### Field of the Invention

The present invention relates to a fixing device.

### Description of the Prior Art

In the manufacture of, e.g., a motor vehicle, various kinds of parts (particularly, electronic parts such as an AM filter and an AM/FM amplifier) are fixed to a vehicle body by a screw holding work using screws. In general, a worker performs such a screw holding work by keeping a part in a specified position of a vehicle body with one hand and tightening a screw with a tool such as a screwdriver held by the other hand while applying a pressing force to the screw. In this method, however, both hands are not free, which makes it hard to hold the screw. As a result, a problem is posed in that the screw may be removed and dropped during the work, thereby reducing the work efficiency.

JP2005-504933A (PCT national stage publication) discloses a fixing clip for solving the problem noted above. The fixing clip is used to, e.g., fix a hand grip to the ceiling of a vehicle body. The fixing clip includes an anchoring portion, which has a U-shaped extension and a strip provided in the base end of the U-shaped extension and greater in diameter than the U-shaped extension, and a clip plate formed independently of the anchoring portion and provided inside the anchoring portion.

The fixing clip can fix the handgrip to the vehicle body in the following manner. First, the U-shaped extension of the anchoring portion is inserted into a body hole formed in the ceiling of the vehicle body until the strip comes into contact with the ceiling. Then, a holder plate of the handgrip is embedded in the strip. A strip hole for passage of a fixing screw is formed in the strip. The fixing screw is inserted through the strip hole and threadedly coupled with the clip plate. Then, the fixing screw is rotated to cause the clip plate to come close to the holder plate. During displacement toward the holder plate, the clip plate outwardly expands an expansion flap provided in the anchoring portion. By pressing the expanded expansion flap against the ceiling area around the body hole, the clip plate securely fixes the holder plate to the ceiling.

With the fixing clip set forth above, it is possible to easily fix a desired object member to a desired anchoring spot (member). In the fixing clip disclosed in JP2005-504933A, however, a desired object member is interposed between the fixing screw and the fixing clip, which makes it necessary to attach the fixing screw to the fixing clip during the assembling process. Thus, it is likely that the fixing screw cannot be successfully attached or may be dropped. This poses a problem in that it is difficult to smoothly perform an assembling work. Another problem resides in that the configuration becomes complex.

JP5-263816A discloses a temporary screw holding device (or a temporary screw fixation holder) for solving the problems mentioned above. The temporary screw holding device includes a base and a holder portion supported on the base by a pair of leg portions in a spaced-apart relationship with the base. A hole having a diameter a little smaller than the diameter of a screw is formed in the holder portion. A screw is press-fitted to the hole. Thus, the screw is held in an upstanding state with respect to the base. The respective leg portions are formed into an inwardly-curved shape so that they can be deformed with ease.

The temporary screw holding device is used in such a manner that the base thereof is fixed to a screw fixation area of a part by a double-sided tape. A worker brings the part carrying the temporary screw holding device into alignment with a specified area of a vehicle body and tightens a screw with a tool such as a screwdriver while applying a pressing force to the screw. The temporary screw holding device disclosed in JP5-263816A is designed so that, upon tightening the screw, the leg portions can be crushed inwards in a double folded state. In this work, the screw is held in position by the temporary screw holding device, consequently preventing the problem inherent in the prior art, namely the problem that the screw is dropped during the work. This makes it possible to easily and smoothly screw-fix the part to the vehicle body.

While the temporary screw holding device disclosed in JP5-263816A is capable of solving the problem inherent in the prior art, it suffers from the following problems.

A first problem resides in that the temporary screw holding device becomes greater in size due to the configuration thereof. Since the temporary screw holding device is designed so that, when tightening the screw, the leg portions can be crushed inwards in a double folded state, it is necessary to increase the length of the base and the holder portion (namely, the length of the base and the holder portion in the direction in which the leg portions are spaced apart) and to secure a space within which the leg portions are crushed. As a result, the temporary screw holding device becomes greater in size.

A second problem lies in that the tightening force of the screw is decreased in the temporary screw holding device. The temporary screw holding device is designed so that, when tightening the screw, the leg portions can be crushed inwards in a double folded state. In the state that the screw is tightened, therefore, the crushed leg portions exist between the holder portion and the base, thereby leaving a gap between the holder portion and the base (see Fig. 3 in JP5-263816A). The gap thus formed makes it impossible to sufficiently tighten the screw, eventually reducing the tightening force of the screw.

### SUMMARY OF THE INVENTION

It is an object of the present invention to provide a fixing device capable of easily fixing an object onto a target object with a simple configuration.

In order to achieve the above object, the present invention is directed to a fixing device for fixing an object onto a target object having an opening, which comprises a fixing member formed from a plate-shaped member having a through-hole, the object being provided on the fixing member; a fastening member for fixing the fixing member with the object onto the target object, the fastening member comprising a pair of leg portions which are engaged at respective one ends thereof with the fixing member, a connecting portion which connects the other ends of the leg portions together and in which a threaded hole is formed, and at least one projecting portion projecting outwardly with respect to the connecting portion toward the fixing member; and a screw which rotatably passes through the through-hole of the fixing member and is adapted to be threaded into the threaded hole of the fastening member. With the fixing device having the above structure, when the screw is rotated to be threaded into the threaded hole in a state that the fixing member is positioned on one surface of the target object and the fastening member is positioned on the other surface of the target object through the opening of the target object, the fastening member is displaced according to the rotation of the screw so that the projecting portion makes abutment with the other surface of the target object so as to hold the target object between the projecting portion of the fastening member and the fixing member, thereby fixing the object onto the target object through the fixing member.

This makes it possible to prevent the screw from removing and dropping during the work.

In the fixing device according to the present invention, it is preferred that the projection portion engages a part of the other surface of the target object near an edge of the opening in a state that the target object is held between the projecting portion of the fastening member and the fixing member.

This makes it possible to prevent the fastening member from being excessively displaced toward the fixing member, which assists in improving the operability of the fixing device.

In the fixing device according to the present invention, it is preferred that the at least one projecting portion includes two pairs of projecting portions, and each pair of projecting portions is provided at each end of the connecting portion.

This makes it possible to fix the object to the target object in a reliable manner.

In the fixing device according to the present invention, it is preferred that the fixing member includes a pair of cutout portions formed in the plate-shaped member at the opposite sides of the through-hole, and the pair of leg portions are slidably displaced within the cutout portions, respectively.

This makes it possible to prevent the fastening member from being fallen off from the cutout portions.

In the fixing device according to the present invention, it is preferred that the connecting portion includes a threaded portion in which the threaded hole is formed and a pair of tapered portions which are coupled to the leg portions and both sides of the threaded portion, respectively, wherein the tapered portions are inclined so that a distance therebetween decreases far away from the fixing member.

This makes it possible to smoothly insert the fastening member into the opening of the target object.

In the fixing device according to the present invention, it is preferred that the fastening member includes a pair of shoulder portions which are coupled to the one ends of the leg portions, respectively, so as to engage with the fixing member for preventing the fastening member from being fallen off from the fixing member when the screw is threaded off from the threaded hole.

This makes it possible to keep the fastening member engaged with the fixing member when the screw is threaded off from the threaded hole.

In the fixing device according to the present invention, it is preferred that the fastening member is formed by bending and/or folding a single metal plate member.

This makes it possible to manufacture the fastening member in a simple manner.

In the fixing device according to the present invention, it is preferred that the fixing device further comprises a displacement preventing means for preventing the screw from being displaced with respect to the fixing member in an axial direction of the screw.

This makes it possible to prevent the screw from displacing in the axial direction with respect to the fixing member.

In the fixing device according to the present invention, it is preferred that the displacement preventing means includes a clamp member secured around the screw in such a manner that the fixing member is sandwiched between a screw head of the screw and the clamp member.

This makes it possible to prevent the fastening member from displaced in the axial direction with respect to the fixing member without relying upon the rotation of the screw.

### BRIEF DESCRIPTION OF THE DRAWINGS

Fig. 1 is a perspective view of a fixing device for fixing an object onto a target object with a screw according to a first embodiment of the present invention.

Fig. 2 is a cross-sectional view of the fixing device shown in Fig. 1.

Fig. 3 is a top view of the fixing device shown in Fig. 1.

Fig. 4 is a side view of the fixing device shown in Fig. 1.

Fig. 5 is a bottom view of a part of the fixing device shown in Fig. 1.

Fig. 6 is a cross-sectional view of the fixing device shown in Fig. 1 which shows a method of using the fixing device.

Fig. 7 is a cross-sectional view of the fixing device shown in Fig. 1 which shows a method of using the fixing device.

Fig. 8 is a side view of a modification of a fixing member to be fixed by the fixing device shown in Fig. 1.

Fig. 9 is a side view which shows a method of fixing the fixing member shown in Fig. 8.

Fig. 10 is a cross-sectional view of a fixing device for fixing an object onto a target object with a screw according to a second embodiment of the present invention.

Fig. 11 is a cross-sectional view of the fixing device shown in Fig. 10 which shows a state that the fixing member is fixed to the target object by the fixing device shown in Fig. 10.

Fig. 12 is a perspective view of a temporary screw holding device according to a third embodiment of the present invention, which shows a state that the temporary screw holding device is attached to a fixing member.

Fig. 13(A) is a perspective view of the fixing member shown in Fig. 12 and Fig. 13(B) is a cross-sectional view thereof along line A-A in Fig. 13(A).

Fig. 14 is a perspective view of the temporary screw holding device shown in Fig. 12.

Fig. 15 is a cross-sectional view of the temporary screw holding device shown in Fig. 12.

Fig. 16(A) is a perspective view of the temporary screw holding device shown in Fig. 12 which shows a state that the screw is tightened into a threaded hole of the target object and Fig. 16(B) is a cross-sectional view thereof along line A-A in Fig. 16(A)

Fig. 17 is a cross-sectional view of a modification of the temporary screw holding device shown in Fig. 12.

Fig. 18 is a perspective view of a temporary screw holding device according to a fourth embodiment of the present invention.

Fig. 19 is a cross-sectional view of the temporary screw holding device shown in Fig. 18 which shows a state that the screw is tightened into a threaded hole of the target object.

### DETAILED DESCRIPTION OF THE PREFERRED EMBODIMENTS

Hereinafter, certain embodiments of a fixing device according to the present invention will be described in detail with reference to the accompanying drawings.

### <First Embodiment>

First, description will be made on a first embodiment of a fixing device according to the present invention.

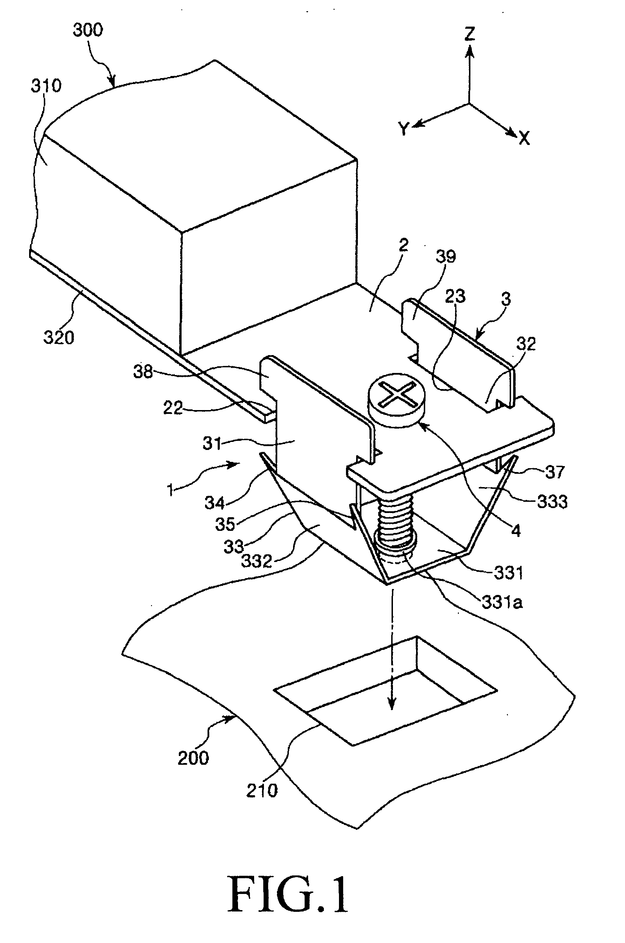

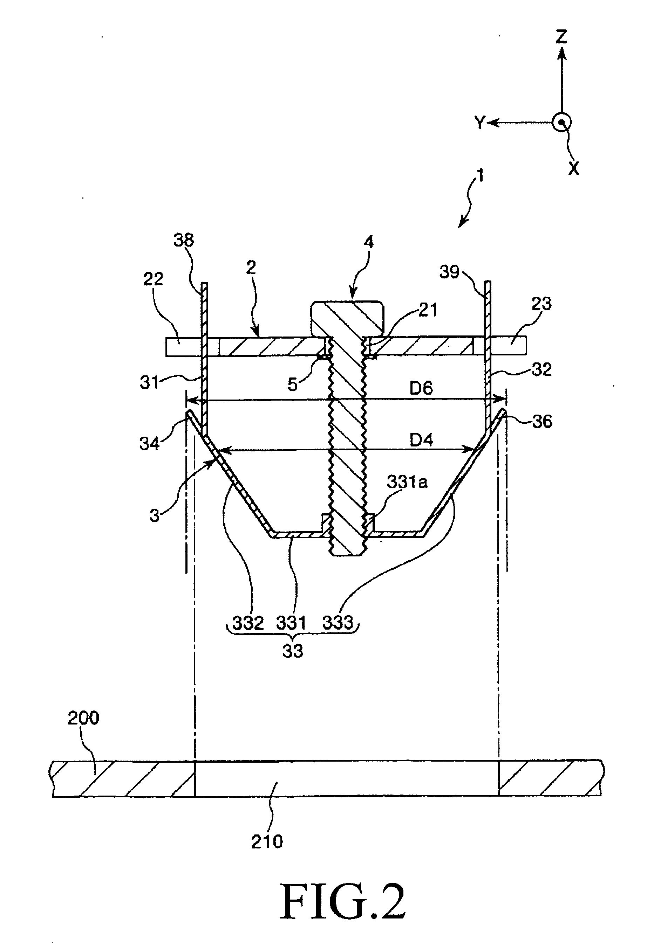

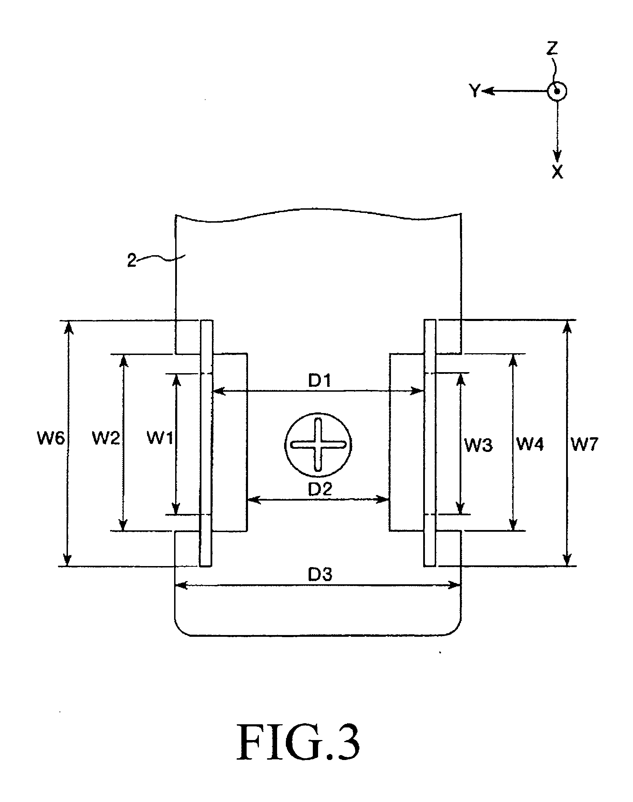

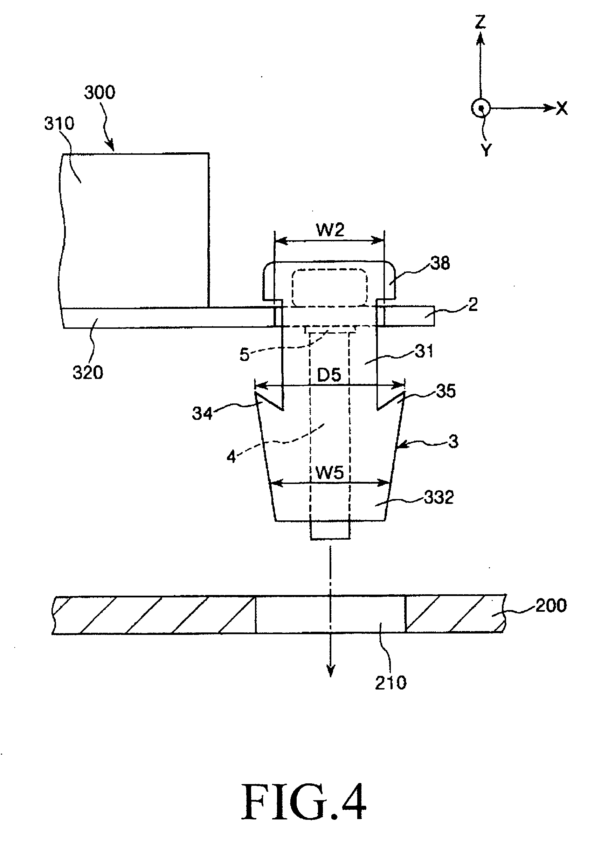

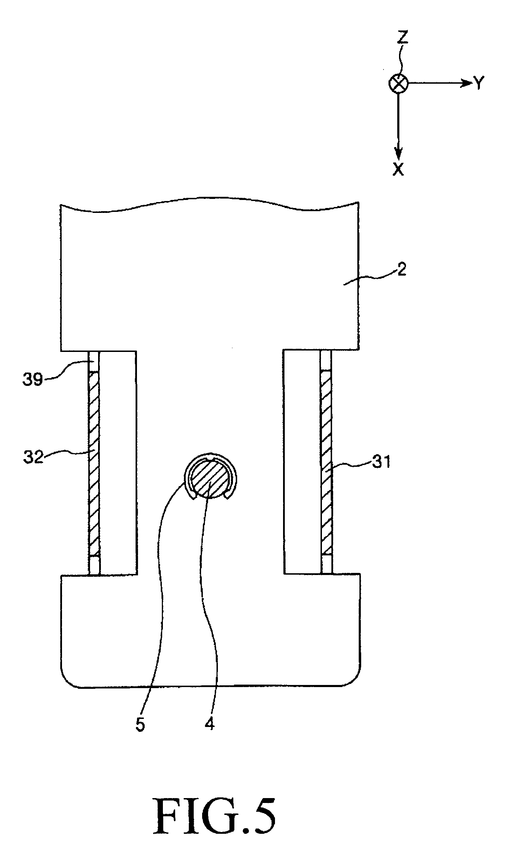

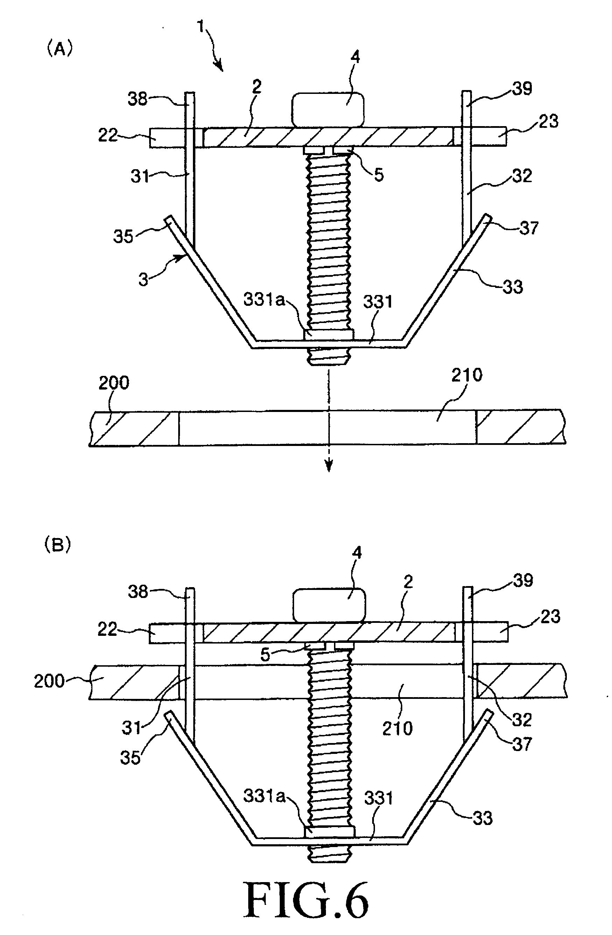

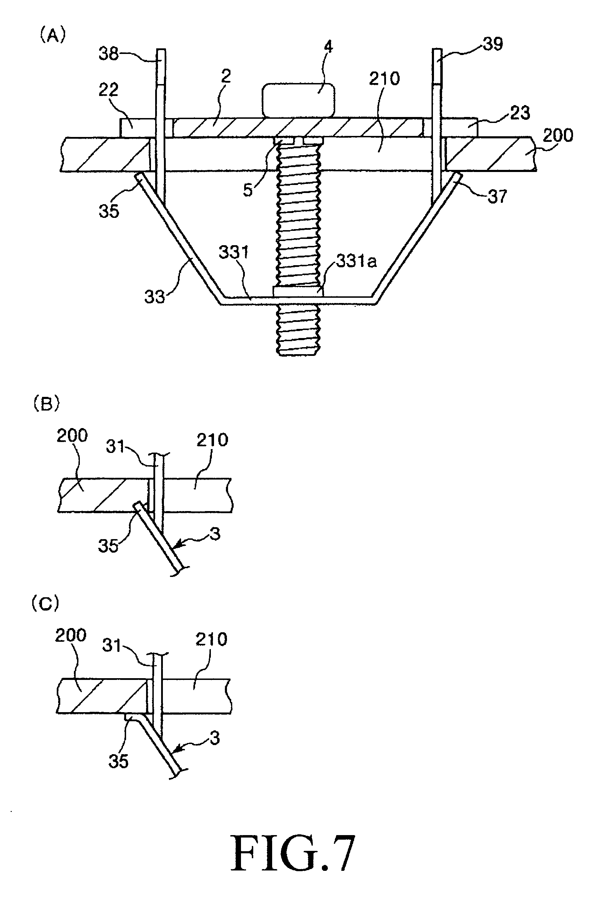

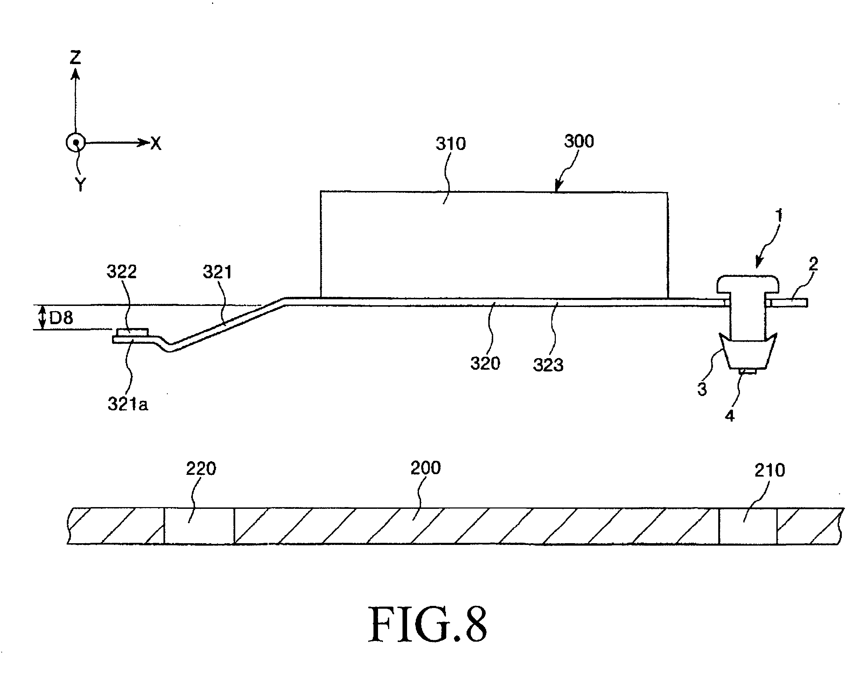

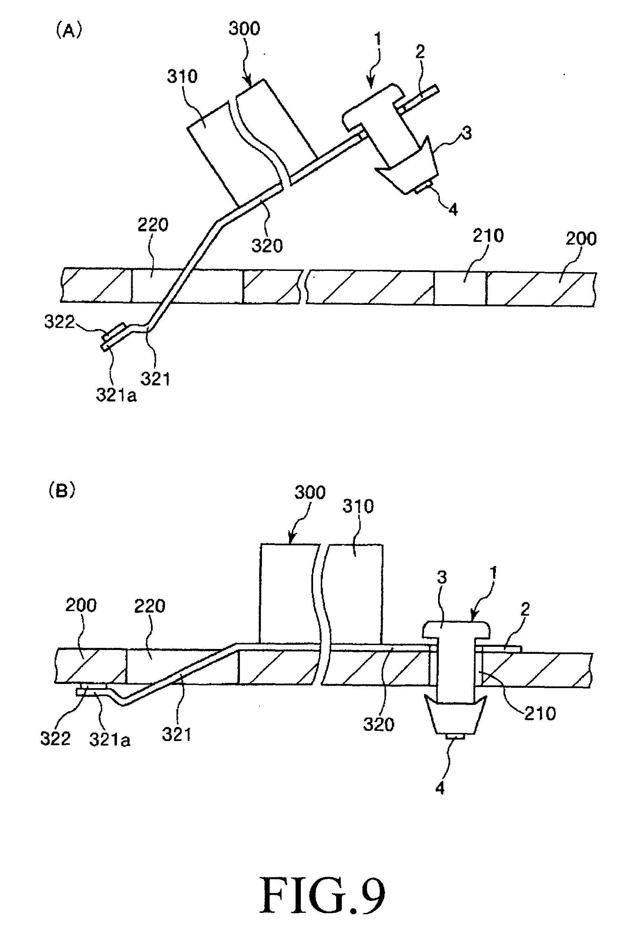

Fig. 1 is a perspective view of a fixing device for fixing an object onto a target object with a screw according to a first embodiment of the present invention. Fig. 2 is a cross-sectional view of the fixing device shown in Fig. 1. Fig. 3 is a top view of the fixing device shown in Fig. 1. Fig. 4 is a side view of the fixing device shown in Fig. 1. Fig. 5 is a bottom view of a part of the fixing device shown in Fig. 1. Fig. 6 is a cross-sectional view of the fixing device shown in Fig. 1 which shows a method of using the fixing device. Fig. 7 is a cross-sectional view of the fixing device shown in Fig. 1 which shows a method of using the fixing device. Fig. 8 is a side view of a modification of a fixing member to be fixed by the fixing device shown in Fig. 1. Fig. 9 is a side view which shows a method of fixing the fixing member shown in Fig. 8. In the following description, the upper side in Figs. 1 to 9 will be referred to as "upper" and the lower side thereof will be referred to as "lower" for convenience of explanation.

A fixing device 1 shown in Fig. 1 is used to fix an object 300 to be fixed (hereinafter just referred to as "object 300") to the upper surface (one surface) of a plate-shaped target object 200 provided with an opening 210.

In the present embodiment, the opening 210 has a rectangular shape with its longitudinal direction running parallel to the Y-axis direction. However, the shape of the opening 210 is not particularly limited thereto. One fixing device 1 is attached to the object 300 in the present embodiment. However, a plurality of fixing devices 1 may be attached to the object 300 in different positions depending on the size, shape and weight of the object 300.

The object 300 is not particularly limited and may be, e.g., electronic parts such as an AM/FM tuner, an AM/FM amplifier, a power supply unit and a motor. The target object 200 to which the object 300 is to be fixed is not particularly limited and may be, e.g., a vehicle body or a building wall (such as an inner wall, an outer wall, a ceiling or a floor).

The object 300 used in the present embodiment includes a housing 310 for holding major components of an electronic part therein and a base 320 for supporting the housing 310. The housing 310 and the base 320 are made of, e.g., metallic materials such as aluminum and copper or various kinds of resin materials such as polyethylene, polypropylene, polyvinylchloride, polystyrene, polyamide and polyimide.

As shown in Fig. 1, the fixing device 1 includes a plate-shaped fixing member 2 fixedly provided in the object 300, a fastening member 3 engageable with the fixing member 2 and movable in the Z-axis direction with respect to the fixing member 2, a screw 4 for displacing the fastening member 3 in the Z-axis direction with respect to the fixing member 2, and a displacement preventing member (displacement preventing means) 5 for preventing the screw 4 from being displaced in the Z-axis direction.

The fixing member 2 is integrally formed with the base 320 of the object 300. In the present embodiment, the base 320 partially protrudes from the housing 310 to make up the fixing member 2. The fixing member 2 may be formed independently of the base 320 as long as it can be attached to the object 300, and may be attached to the object 300 by bonding, welding, thread-coupling or fitting.

In case where the fixing member 2 is formed independently of the base 320, the constituent material of the fixing member 2 may be, but is not particularly limited to, relatively hard materials, e.g., metallic materials such as aluminum and copper or various kinds of resin materials such as polyethylene, polypropylene, polyvinylchloride, polystyrene, polyamide and polyimide.

As shown in Fig. 1, the fixing member 2 is formed into a thin plate shape and the major surfaces thereof (a pair of surfaces of the fixing member 2 opposing to each other in the thickness direction) are arranged parallel to the X-Y plane. As can be seen in Fig. 2, a through-hole 21 is formed in the fixing member 2. The through-hole 21 is a hole through which the shaft of the screw 4 passes. As the screw 4 is inserted through the through-hole 21, the fixing member 2 holds the screw 4 in place.

As shown in Fig. 2, the screw 4 is not threadedly coupled to the fixing member 2 when held in place by the fixing member 2 and is rotatable (can idle) with respect to the fixing member 2. The shape and size of the through-hole 21 is not particularly limited insofar as the afore-mentioned conditions are satisfied. For example, the through-hole 21 may be formed into a circular shape to have a diameter greater than the largest outer diameter of the shaft of the screw 4 (namely, the outer diameter of the apexes of the thread ridges of the screw 4) but smaller than the outer diameter of the head of the screw 4.

As shown in Figs. 1 and 2, the fixing member 2 has a pair of cutout portions 22 and 23 arranged in a mutually opposing relationship in the Y-axis direction with the through-hole 21 interposed therebetween. The cutout portions 22 and 23 are formed so that they can be opened laterally outwards from the fixing member 2. When seen in a plan view, each of the cutout portions 22 and 23 has a rectangular shape with its longitudinal direction running parallel to the X-axis direction. The cutout portions 22 and 23 are identical in shape with each other.

The fastening member 3 engages with the fixing member 2 so that it can be displaced in the Z-axis direction. The fastening member 3 is inserted into the opening 210 of the target object 200 and serves to fasten the fixing member 2 onto the target object 200.

As shown in Figs. 1 and 2, the fastening member 3 includes a pair of leg portions 31 and 32, a pair of shoulder portions (drop preventing means) 38 and 39 connected to the upper ends of the leg portions 31 and 32, respectively, a connecting portion 33 for interconnecting the lower ends of the leg portions 31 and 32, and four projecting portions 34, 35, 36 and 37 provided at the opposite ends of the connecting portion 33.

The leg portions 31 and 32 are arranged in a mutually opposing relationship in the Y-axis direction with the fixing member 2 (the through-hole 21) interposed therebetween. The leg portions 31 and 32 are formed into a thin plate shape to extend in the Z-axis direction and the major surfaces thereof (a pair of surfaces of each of the leg portions 31 and 32 opposing to each other in the thickness direction) are arranged parallel to the X-Z plane. The leg portion 31 is inserted into the cutout portion 22 of the fixing member 2, and the leg portion 32 is inserted into the cutout portion 23. The leg portions 31 and 32 are slidable within the cutout portions 22 and 23 with respect to the fixing member 2.

Referring to Fig. 3, the width (the X-axis length) W1 of the leg portion 31 is set a little smaller than the width (the X-axis length) W2 of the cutout portion 22. Similarly, the width (the X-axis length) W3 of the leg portion 32 is set a little smaller than the width (the X-axis length) W4 of the cutout portion 23. The spaced-apart distance D1 between the leg portions 31 and 32 is greater than the spaced-apart distance D2 between the cutout portions 22 and 23 but smaller than the width (the Y-axis length) D3 of the fixing member 2. By designing the leg portions 31 and 32 in this manner, it is possible to prevent the fastening member 3 from falling off from the cutout portions 22 and 23 and to prevent the leg portions 31 and 32 from making excessive contact with the fixing member 2, which makes it possible to reduce the sliding resistance caused by the contact of the leg portions 31 and 32 with the fixing member 2. This enables the leg portions 31 and 32 (namely, the fastening member 3) to smoothly slide with respect to the fixing member 2.

The spaced-apart distance D1 between the leg portions 31 and 32 is set smaller than the length (the Y-axis length) of the opening 210.

As shown in Fig. 2, the connecting portion 33 is provided to interconnect the lower ends of the leg portions 31 and 32 (the insertion direction tip ends of the fastening member 3). The connecting portion 33 includes a threaded portion 331 positioned in the tip end of the fastening member 3 (the insertion direction tip end of the opening 210), a first tapered portion 332 for interconnecting the threaded portion 331 and the leg portion 31, and a second tapered portion 333 for interconnecting the threaded portion 331 and the leg portion 32.

The threaded portion 331 is formed into a thin plate shape and the major surfaces thereof (a pair of surfaces of the threaded portion 331 opposing to each other in the thickness direction) are arranged parallel to the X-Y plane. The Y-axis length of the threaded portion 331 is smaller than the spaced-apart distance D1 between the leg portions 31 and 32. When seen in the X-Y plane, the threaded portion 331 is positioned between the leg portions 31 and 32.

The plan-view shape of the threaded portion 331 is not particularly limited as long as the threaded portion 331 can pass through the opening 210 of the target object 200. In the present embodiment, the long side and short side of the threaded portion 331 are shorter than the long side and short side of the opening 210. The threaded portion 331 is formed into a generally rectangular shape to extend in the Y-axis direction.

As shown in Fig. 2, a threaded hole 331a thicker than other areas of the threaded portion 331 is formed in the central area of the threaded portion 331 by, e.g., burring. A female thread threadedly engaging with the screw 4 is formed on the inner surface of the threaded hole 331a.

The screw 4 is threadedly coupled to the threaded hole 331a. If the screw 4 is rotated in one direction, the fastening member 3 is displaced to cause the threaded portion 331 to move toward the fixing member 2. If the screw 4 is rotated in the other direction, the fastening member 3 is displaced to cause the threaded portion 331 to move away from the fixing member 2.

The first tapered portion 332 is formed into a thin plate shape and the major surfaces thereof (a pair of surfaces of the first tapered portion 332 opposing to each other in the thickness direction) are arranged in a slanting relationship with the X-Y plane and the X-Z plane. Similarly, the second tapered portion 333 is formed into a thin plate shape and the major surfaces thereof (a pair of surfaces of the tapered portion 333 opposing to each other in the thickness direction) are arranged in a slanting relationship with the X-Y plane and the X-Z plane.

The spaced-apart distance D4 between the first and second tapered portions 332 and 333 is gradually decreased from the threaded portion 331 toward the leg portions 31 and 32. In other words, the connecting portion 33 makes up a taper portion in which the tip end extension of the fastening member 3 tapers off. Provision of the connecting portion 33 of this shape makes it easy to guide the tip end portion of the fastening member 3 into the opening 210 and makes it possible to smoothly insert the fastening member 3 into the opening 210.

Referring to Fig. 4, the first tapered portion 332 is formed into a generally trapezoidal shape so that the width (the X-axis length) W5 thereof can be gradually increased from the threaded portion 331 toward the leg portion 31. The width of the upper end of the first tapered portion 332 (the end of the first tapered portion 332 near the leg portion 31) is greater than the width of the leg portion 31. The first tapered portion 332 is connected to the leg portion 31 in the central portion of the upper end thereof excluding the lateral edge portions. The shape of the second tapered portion 333 is the same as the shape of the first tapered portion 332 and therefore will not be described in detail.

As shown in Fig. 4, a pair of projecting portions 34 and 35 are respectively provided at the upper end portion of the first tapered portion 332, namely at one end portion of the connecting portion 33. When seen in the X-Z plane, the projecting portions 34 and 35 are positioned at the opposite sides with respect to the leg portion 31, that is at the lateral edge portions thereof.

The projecting portions 34 and 35 project laterally outward from the fastening member 3 and toward the fixing member 2 (In other words, the projecting portions 34 and 35 project obliquely leftwards and upwards in Fig. 2). In the present embodiment, each of the projecting portions 34 and 35 is formed on the same plane as the first tapered portion 332. As shown in Fig. 4, the projecting portions 34 and 35 are formed into a generally triangular shape so that the width thereof can be gradually decreased toward the tip end thereof. Among three corners of each of the projecting portions 34 and 35, the corner making up the tip end portion is positioned at the outermost side in the Y-axis direction.

As shown in Fig. 4, the spaced-apart distance D5 between the tip ends of the projecting portions 34 and 35 is greater than the width W2 of the cutout portion 22 formed in the fixing member 2. With this design, if the fastening member 3 is displaced to cause the threaded portion 331 to move toward the fixing member 2, the projecting portions 34 and 35 come into abutment with the lower surface of the fixing member 2 during the displacement of the fastening member 3, thereby inhibiting further displacement of the fastening member 3. This makes it possible to prevent the fastening member 3 from being excessively displaced toward the fixing member 2, which assists in improving the operability of the fixing device 1. It is preferred that the spaced-apart distance D5 be equal to or smaller than the X-axis length of the opening 210. This makes it possible to smoothly insert the fastening member 3 into the opening 210. Moreover, a pair of projecting portions 36 and 37 are respectively provided at the upper end portion of the second tapered portion 333, namely at the other end portion of the connecting portion 33. The projecting portions 36 and 37 have the same configuration as that of the projecting portions 34 and 35 and therefore will not be described in detail.

As shown in Fig. 2, the spaced-apart distance D6 between the tip ends of the projecting portions 34 and 36 spaced apart in the Y-axis direction is set a little greater than the Y-axis length of the opening 210. This holds true in case of the spaced-apart distance between the tip ends of the projecting portions 35 and 37. This ensures that, when the fastening member 3 is displaced toward the fixing member 2 with the fastening member 3 being inserted into the opening 210, the four projecting portions 34, 35, 36 and 37 come into abutment with the lower surface of the target object 200 in a reliable manner. In particular, the projecting portions 34 and 36 make abutment with the lower surface of the target object 200 at the opposite sides with respect to the opening 210 (This holds true in case of the projecting portions 35 and 37). This makes it possible to fix the object 300 onto the target object 200 in a reliable manner.

A shoulder portion 38 is provided in the upper end portion of the leg portion 31 (in the end portion of the leg portion 31 opposite to the fastening member 3). Similarly, a shoulder portion 39 is provided in the upper end portion of the leg portion 32. The shoulder portions 38 and 39 have a function of keeping the fastening member 3 engaged with the fixing member 2, namely a function of preventing any falling of the fastening member 3 from the fixing member 2, when the thread-coupling of the threaded hole 331a and the screw 4 is released inadvertently or when the screw 4 is not attached in the manufacturing process of the fixing device 1.

As shown in Fig. 1, each of the shoulder portions 38 and 39 is formed into a thin plate shape and the major surfaces thereof (a pair of surfaces of each of the shoulder portions 38 and 39 opposing to each other in the thickness direction) are arranged parallel to the X-Z plane. As shown in Fig. 3, the width (the X-axis length) W6 of the shoulder portion 38 is set greater than the width W2 of the cutout portion 22. Similarly, the width (the X-axis length) W7 of the shoulder portion 39 is set greater than the width W4 of the cutout portion 23. Thus, the shoulder portions 38 and 39 make abutment with the upper surface of the fixing member 2, consequently preventing the fastening member 3 from falling off from the fixing member 2.

The leg portions 31 and 32, the connecting portion 33, the projecting portions 34, 35, 36 and 37, the shoulder portions 38 and 39, which make up the fastening member 3, have been described above in detail. These components can be formed in one piece by, e.g., machining a single thin plate member into a desired outward shape and then bending the plate at specified points. This makes it possible to manufacture the fastening member 3 in a simple manner. The constituent material of the fastening member 3 is not particularly limited but may preferably be a relatively hard material. For example, metallic materials such as aluminum and copper can be used as the constituent material of the fastening member 3.

As set forth above, the screw 4 is not threadedly coupled to but rotatably inserted through the through-hole 21 of the fixing member 2. The screw 4 is threadedly coupled to the threaded hole 331a formed in the threaded portion 331 of the fastening member 3. The length of the screw 4 is set such that the thread coupling of the screw 4 to the threaded hole 331a is not released when the threaded portion 331 of the fastening member 3 is moved farthest away from the fixing member 2, namely when the shoulder portions 38 and 39 are brought into abutment with the fixing member 2.

In the state that the screw 4 is not threadedly coupled to but rotatably inserted through the through-hole 21 of the fixing member 2, the screw 4 and the fastening member 3 may be displaced together in the Z-axis direction with respect to the fixing member 2. If such displacement occurs, it may be hard to insert the fastening member 3 into the opening 210. In order to prevent occurrence of such displacement, a displacement preventing means 5 is attached to the screw 4 in the fixing device 1 of the present embodiment.

Referring to Fig. 5, the displacement preventing means 5 is formed of a clamp member that can be secured around the shaft of the screw 4, e.g., an E-ring. The displacement preventing means 5 is fixed to the base end portion of the shaft of the screw 4 with the fixing member 2 interposed between the displacement preventing means 5 and the head of the screw 4. Thus, the screw 4 cannot be displaced in the Z-axis direction, thereby restraining free displacement of the fastening member 3 in the Z-axis direction. In other words, without relying upon the rotation of the screw 4, the fastening member 3 cannot be displaced in the Z-axis direction with respect to the fixing member 2. Use of this configuration makes it possible to easily insert the fastening member 3 into the opening 210.

The configuration of the fixing device 1 has been described above in detail. Next, a method of using the fixing device 1 will be described with reference to Figs. 6 and 7.

First, the screw 4 is rotated so that the threaded portion 331 of the fastening member 3 can be moved farthest away from the fixing member 2 as shown in Fig. 6A, namely so that the shoulder portions 38 and 39 can be brought into abutment with the upper surface of the fixing member 2. Then, the fastening member 3 is inserted into the opening 210 of the target object 200 to place the projecting portions 34, 35, 36 and 37 below the lower surface of the target object 200 as shown in Fig. 6B. When inserting the fastening member 3 into the opening 210, the projecting portions 34, 35, 36 and 37 are brought into abutment with the side surface of the opening 210 and are flexed inwards. After passing through the opening 210, the projecting portions 34, 35, 36 and 37 are quickly returned to the original state (the state available before passing through the opening 210).

Thereafter, the screw 4 is rotated in the reverse direction to displace the threaded portion 331 of the fastening member 3 toward the fixing member 2. This reduces the spaced-apart distance between the fixing member 2 and the four projecting portions 34, 35, 36 and 37 as shown in Fig. 7A. Consequently, the lower surface of the fixing member 2 comes into abutment with the upper surface of the target object 200, and the four projecting portions 34, 35, 36 and 37 make contact with the lower surface of the target object 200. Thus, the fixing member 2 is fastened to the target object 200 by the projecting portions 34, 35, 36 and 37, and the object 300 is fixed onto the target object 200.

Even after the lower surface of the fixing member 2 comes into abutment with the upper surface of the target object 200 and the four projecting portions 34, 35, 36 and 37 make contact with the lower surface of the target object 200 near the edge of the opening 210, the screw 4 may be further rotated to cause the threaded portion 331 to move nearer to the fixing member 2. Depending on the hardness relationship between the target object 200 and the projecting portions 34, 35, 36 and 37, the projecting portions 34, 35, 36 and 37 may cut into the target object 200 as shown in Fig. 7B or may be deformed as shown in Fig. 7C. This makes it possible to more securely fix the object 300 onto the target object 200.
The first embodiment has been described above. Description will now be made on a modified example of the first embodiment.

Referring to Fig. 8, the base 320 of the object 300 is formed into an elongate shape so that the opposite end portions thereof can protrude from the housing 310. One end portion of the base 320 makes up the fixing member 2 of the fixing device 1 described above. The other end portion of the base 320 makes up a deformable portion 321 that can be bent or flexed in the thickness direction of the base 320. The tip end portion 321a of the deformable portion 321 is arranged so that the major surfaces thereof can extend parallel to the X-Y plane. An elastic body 322 made of rubber or other like materials is provided on the upper surface of the tip end portion 321a. In this deformable portion 321, the Z-axis spaced-apart distance D8 between the upper surface of the elastic body 322 and the central portion 323 of the base 320 is set a little smaller than the thickness of the target object 200.

In addition to the opening 210 for insertion of the fastening member 3 of the fixing device 1, an opening 220 for insertion of the deformable portion 321 is formed in the target object 200. The object 300 is fixed to the target object 200 in the following manner.

As shown in Fig. 9A, the deformable portion 321 is first inserted into the opening 220 with the object 300 kept inclined with respect to the target object 200. Then, as shown in Fig. 9B, the fastening member 3 of the fixing device 1 is inserted into the opening 210. Thereafter, the object 300 is fixed onto the target object 200 by tightening the fixing device 1 in the manner described above. In this state, the elastic body 322 provided in the deformable portion 321 is compressed in the thickness direction and the deformable portion 321 is flexed in the thickness direction. Thus, there is generated a force biasing the elastic body 322 and the deformable portion 321 into a natural state (namely, a reaction force). The object 300 is more strongly fixed onto the target object 200 by the reaction force.

### <Second Embodiment>

Next, description will be made on a second embodiment of the fixing device according to the present invention.

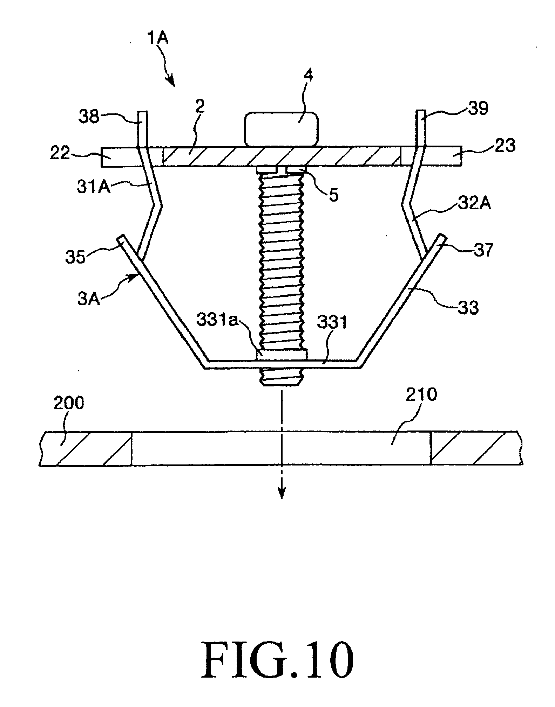

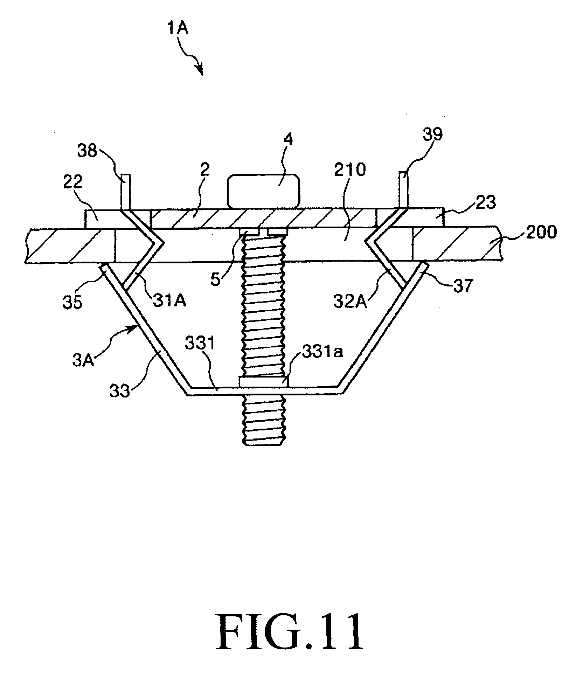

Fig. 10 is a cross-sectional view of a fixing device for fixing an object onto a target object with a screw according to a second embodiment of the present invention. Fig. 11 is a cross-sectional view of the fixing device shown in Fig. 10 which shows a state that the fixing member is fixed onto the target object by the fixing device shown in Fig. 10.

The description on the second embodiment made below will be centered on the points differing from the first embodiment. No description will be made on the same points.

The fixing device 1A of the present embodiment is the same as the fixing device 1 of the first embodiment except that the fastening member 3A is fixed to the fixing member 2 and that the leg portions 31A and 32B of the fastening member 3A are deformable. The same components as those of the first embodiment will be designated by like reference symbols.

Referring to Fig. 10, the fastening member 3A of the fixing device 1A is fixed to the fixing member 2. The method of fixing the fastening member 3A to the fixing member 2 is not particularly limited. For example, the shoulder portions 38 and 39 and the fixing member 2 may be welded together or may be bonded together through the use of an adhesive agent.

Each of the leg portions 31A and 32B is formed into an inwardly-bent generally wedge shape. The bend portion of each of the leg portions 31A and 32B is weaker than the remaining portions thereof. Each of the leg portions 31A and 32B is readily deformable because it can be collapsed around the bend portion.

In the fixing device 1A, if the screw 4 is rotated to cause the threaded portion 331 of the fastening member 3A to move toward the fixing member 2, the threaded portion 331 is moved toward the fixing member 2 along with the flexural deformation of the leg portions 31A and 32B around the bend portions thereof as shown in Fig. 11. Consequently, the lower surface of the fixing member 2 comes into abutment with the upper surface of the target object 200, and the four projecting portions 34, 35, 36 and 37 make contact with the lower surface of the target object 200. Thus, the object 300 is fixed onto the target object 200.

In addition, the object of the prevent invention is also achieved by a temporary screw holding device described below.

Namely, in order to achieve the object, the present invention is directed to a temporary screw holding device 3B to be attached to a fixing member 2B to be fixed onto a target object 200B with a screw 4B, the fixing member 2B being provided with an object to be fixed 300B. The target object 200B has a threaded hole 230B to which the screw 4B is to be threaded. The temporary screw holding device 3B comprises a plate-shaped support portion 6 which is to be placed on the fixing member 2B, the support portion 6 having a hole 61 in which the screw 4B passes; a screw holding portion 7 having a screw insertion hole 71 for holding the screw 4B, the screw holding portion 7 being provided above the support portion 6 with a space therebetween; and a coupling portion 8 which couples one side of the support portion 6 and a corresponding side of the screw holding portion 7, the coupling portion 8 having a bend portion 81 which is bendable or deformable toward an outside direction at a region between the support portion 6 and the screw holding portion 7. Further, the coupling portion 8 is configured so that the bend portion 8 of the coupling portion 81 is deformed to protrude toward the outside direction as the screw holding portion 7 approaches the support portion 6 by fastening the screw 4B into the threaded hole 230B of the target object 200B.

This makes it possible to prevent the screw 4B from dropping during the work and to easily and smoothly fix the object 300B onto the target object 200B through the fixing member 2B.

In the temporary screw holding device 3B according to the present invention, it is preferred that the temporary screw holding device 3B further comprises a falling preventing means 9 for preventing the screw 4B from being fallen off from the screw insertion hole 71.

This makes it possible to prevent any inadvertent falling of the screw 4B from the screw holding portion 7, thereby the work efficiency is enhanced.

In the temporary screw holding device 3B according to the present invention, it is preferred that the falling preventing means 9 includes at least one projection 91, 92, 93, 94 projecting from an edge of the screw insertion hole 71 toward a center thereof so that the at least one projection engages with a screw groove of the screw 4B.

This means that the screw 4B and the protrusions 91, 92, 93 and 94 do not come into full thread coupling, thereby the screw 4B is easily inserted into the through-hole 71.

In the temporary screw holding device 3B according to the present invention, it is preferred that the bend portion 81 of the coupling portion 8 is in advance bent so as to form a wedge shape part.

This makes it possible to easily deform the coupling portion 8, thereby the screw-fixing work of the fixing member 2B being provided with the object 300B is peformed easily.

In the temporary screw holding device 3B according to the present invention, it is preferred that a length L1 from a tip of the wedge shape bend portion 81 of the coupling portion 8 to the screw holding portion 7 is shorter than a length L2 from the tip of the wedge shape bend portion 81 of the coupling portion 8 to the support portion 6.

This makes it possible to position the bend portion 81 above opposite end portions of the coupling portion 8 when the screw-fixing work comes to an end.

In the temporary screw holding device 3B according to the present invention, it is preferred that the fixing member 2B has a slide holder 22B, 23B provided on an upper surface thereof, and the temporary screw holding device 3B is adapted to be attached to the fixing member 2B by inserting the support portion 6 into the slide holder 22B, 23B.

This makes it possible to easily attach the temporary screw holding device 3B onto the fixing member 2B.

In the temporary screw holding device 3B according to the present invention, it is preferred that the support portion 6 has an edge part from which the support portion 6 is inserted into the slide holder 22B, 23B, and the edge part of the support portion 6 is tapered.

This makes it possible to smoothly insert the support portion 6 into the slide holder 22B and 23B.

In the temporary screw holding device 3B according to the present invention, it is preferred that the temporary screw holding device 3B further comprises a positioning means 10 for positioning the support portion 6 with respect to the fixing member 2B when the temporary screw holding device 3B is attached to the fixing member 2B.

This makes it possible to reliably position the temporary screw holding device 3B in a specified position on the fixing member 2B and to maintain the state.

In the temporary screw holding device 3B according to the present invention, it is preferred that the positioning means 10 includes an engagement portion 63 formed in the support portion 6, and the support portion 6 is positioned with respect to the fixing member 2B in such a manner that the engagement portion 63 is engaged with a protrusion 24B formed on the fixing member 2B.

This makes it possible to reliably decide the position of the support portion 6 with respect to the fixing member 2B through the use of a simple configuration.

Hereinafter, the temporary screw holding device 3B according to the present invention will be described in detail as a third embodiment and a fourth embodiment with reference to the accompanying drawings.

### <Third Embodiment>

Next, description will be made on a third embodiment of the present invention.

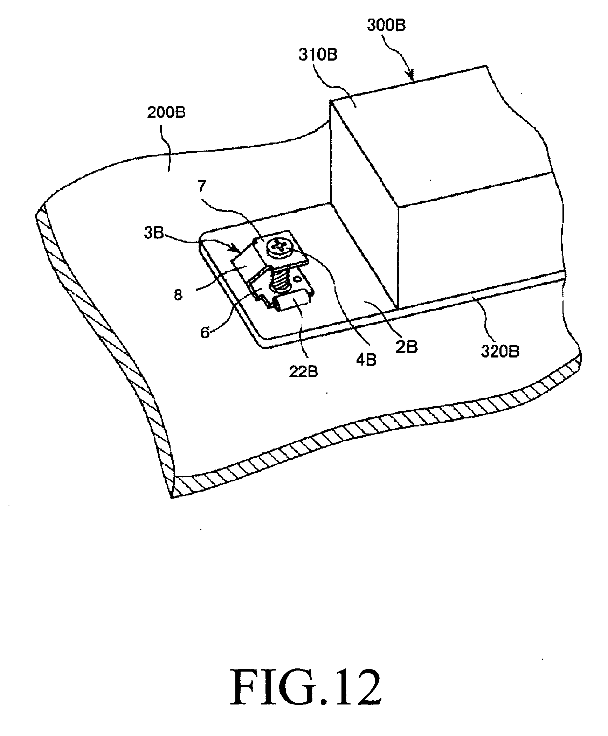

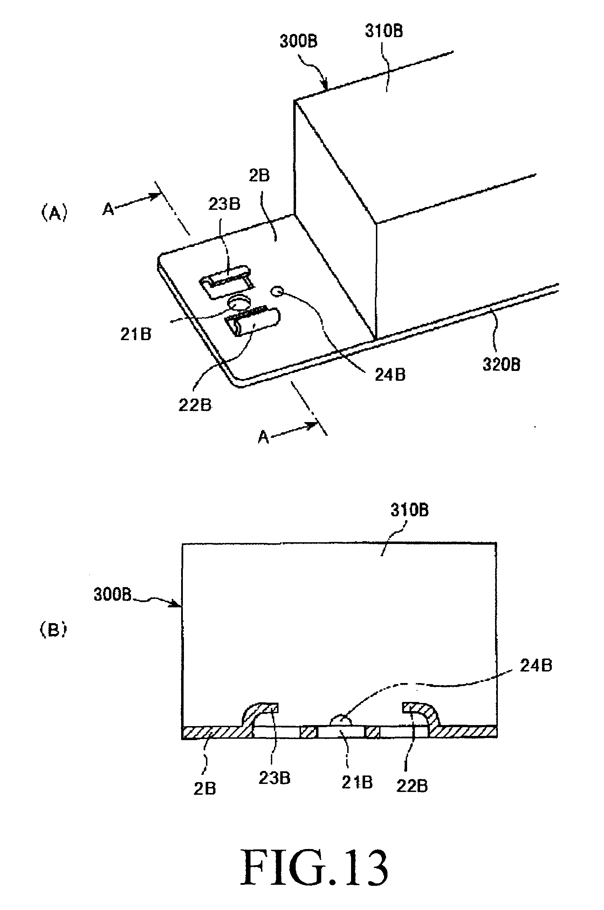

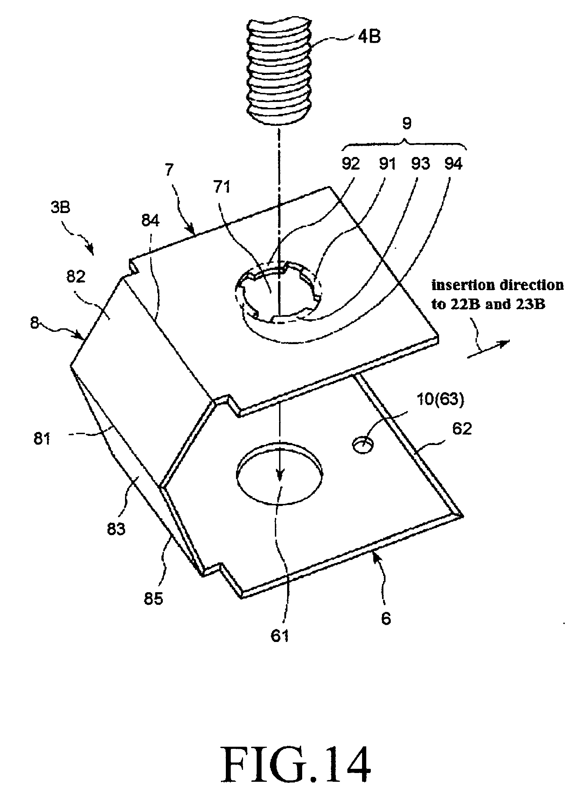

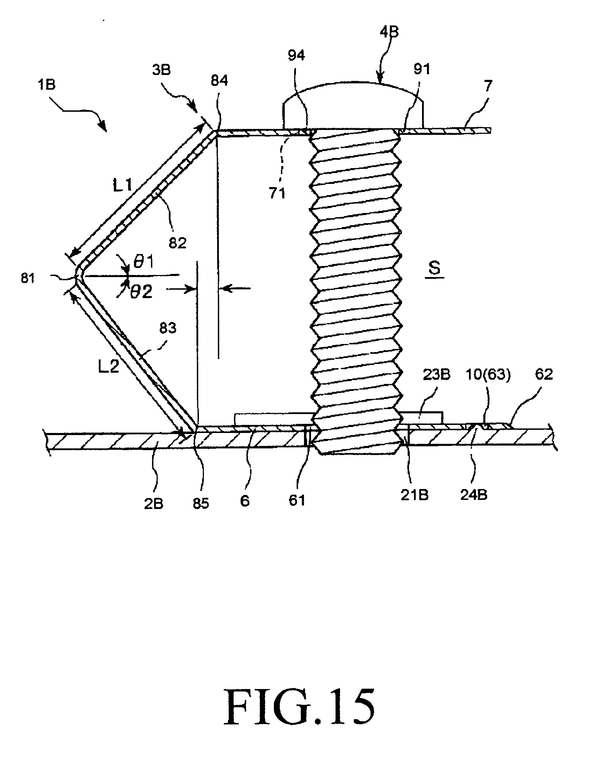

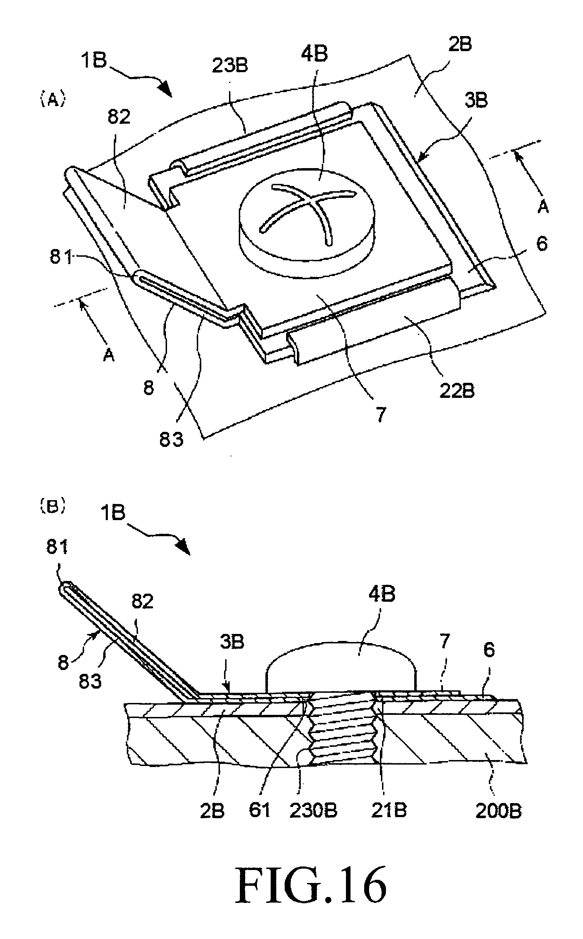

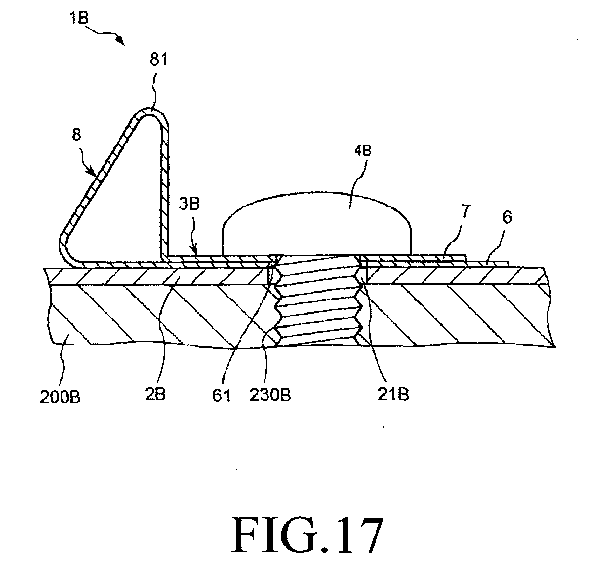

Fig. 12 is a perspective view of a temporary screw holding device according to the third embodiment of the present invention, which shows a state that the temporary screw holding device is attached to the fixing member. Fig. 13(A) is a perspective view of the fixing member shown in Fig. 12 and Fig. 13(B) is a cross-sectional view thereof along line A-A in Fig. 13(A). Fig. 14 is a perspective view of the temporary screw holding device shown in Fig. 12. Fig. 15 is a cross-sectional view of the temporary screw holding device shown in Fig. 12. Fig. 16(A) is a perspective view of the temporary screw holding device shown in Fig. 12 which shows a state that the screw is tightened into a threaded hole of the target object and Fig. 16(B) is a cross-sectional view thereof along A-A line in Fig. 16(A). Fig. 17 is a cross-sectional view of a modification of the temporary screw holding device shown in Fig. 12. In the following description, the upper side in Fig 16(B) will be referred to as "upper" and the lower side thereof will be referred to as "lower" for convenience of explanation.

Referring to Fig. 12, the temporary screw holding device 3B is attached, when in use, to the fixing member 2B to be screw-fixed to the target object 200B. The temporary screw holding device 3B is used to temporarily fix a screw (including a bolt or other threaded members) 4B to the fixing member 2B.

With this temporary screw holding device 3B, it is possible to keep the screw 4B held by the fixing member 2B, namely to prevent the screw 4B from dropping from the fixing member 2B even when the screw 4B is not held by the hands of a worker. When screw-fixing the fixing member 2B, the worker keeps the fixing member 2B being provided with the object 300B in a specified position of the target object 200B with one hand and tightens the screw 4B into a threaded hole 230B (see Fig. 16B) of the target object 200B with a tool such as a screwdriver held by the other hand. This makes it possible to easily and smoothly screw-fix the fixing member 2B to the target object 200B and to fix the object 300B onto the target object 200B, thereby remarkably enhancing the work efficiency. As will be described later, the temporary screw holding device 3B is readily deformed when tightening the screw 4B and does not hinder the screw-fixing operation using the screw 4B.

The description on the third embodiment will be made below.

### [Object to be Fixed]

Referring to Fig. 12, the object 300B of the present embodiment includes a housing 310B for holding major components of an electronic part therein, and a base 320B for supporting the housing 310B.

The fixing member 2B is integrally formed with the base 320B of the object 300B. In the present embodiment, the base 320B partially protrudes from the housing 310B to make up the fixing member 2B. The fixing member 2B may be formed independently of the base 320B as long as it can be attached to the object 300B, and may be attached to the object 300B by bonding, welding, thread-coupling or fitting.

At least one through-hole 21B for insertion of the screw 4B serving as a screw-fixing hole is formed in the fixing member 2B. The number and arrangement of the through-hole 21B is not particularly limited insofar as the fixing member 2B can be screw-fixed to a specified position of the target object 200B through the through-hole 21B. A plurality of through-holes 21B may be formed depending on the shape, size and weight of the fixing member 2B.

The shape and size of the through-hole 21B is not particularly limited insofar as the screw 4B can pass through the through-hole 21B. It is preferred that the through-hole 21B be formed into a circular shape to have a diameter slightly greater than the outer diameter of the shaft of the screw 4B (namely, the outer diameter of the apexes of the thread ridges of the screw 4B or the largest diameter of the screw 4B). This makes it possible to smoothly insert the screw 4B into the through-hole 21B. This also makes it difficult for a gap to be formed between the shaft of the screw 4B and the fixing member 2B. Thus, it is possible to prevent deviation of the fixing member 2B from the specified position, which would otherwise be caused by the gap.

In the vicinity of the through-hole 21B, there is provided a slide holder including a pair of slide pieces 22B and 23B which extend in the same direction and are arranged in a mutually opposing relationship with the through-hole 21B interposed therebetween. The temporary screw holding device 3B has a support portion 6 to be inserted into the slide holder 22B and 23B. The support portion 6 is attached to the fixing member 2B by sliding the support portion 6 along the surface of the fixing member 2B so that the support portion 6 can be inserted into and engaged with the slide holder 22B and 23B. At this time, it is preferred that the support portion 6 be inserted into the slide holder 22B and 23B at the side distant from the housing 310B. This makes it possible to smoothly insert the support portion 6 into the slide holder 22B and 23B with no likelihood that the insertion of the support portion 6 into the slide holder 22B and 23B is hindered by the housing 310B.

Each of the slide holder pieces 22B and 23B can be formed by forming a generally C-like cutout portion in the fixing member 2B and bending the cutout portion into a desired shape. With this method, the slide holder 22B and 23B can be integrally formed with the fixing member 2B, which makes it easy to form the slide holder 22B and 23B.

A protrusion 24B is formed in the vicinity of the through-hole 21B. The protrusion 24B is engageable with an engagement portion 63 formed in the support portion 6 of the temporary screw holding device 3B. The protrusion 24B decides the position of the support portion 6 with respect to the fixing member 2B by engaging with the engagement portion 63. The protrusion 24B and the engagement portion 63 constitute a positioning means 10 for deciding the position of the support portion 6 with respect to the fixing member 2B.

The protrusion 24B is not particularly limited in its shape but may preferably have a shape with a slanting surface, e.g., a hemispherical shape. This enables the insertion direction tip end of the support portion 6 to easily climb over the protrusion 24B when the support portion 6 is slid into the slide holder 22B and 23B. Therefore, the protrusion 24B can smoothly engage with the engagement portion 63. It is preferred that the height of the protrusion 24B be smaller than the thickness of the support portion 6.

It is preferred that the protrusion 24B be positioned ahead of the through-hole 21B in the direction in which the support portion 6 is inserted into the slide holder 22B and 23B. This makes it possible to prevent the protrusion 24B from hindering the insertion of the support portion 6 into the slide holder 22B and 23B and to eliminate the need to apply an excessive force when the support portion 6 is inserted into the slide holder 22B and 23B.

### [Temporary screw holding device]

Referring to Fig. 14, the temporary screw holding device 3B includes the support portion 6 to be attached to the fixing member 2B, a screw holding portion 7 for holding the screw 4B used in screw fixation and a coupling portion 8 for interconnecting the support portion 6 and the screw holding portion 7. The temporary screw holding device 3B further includes a falling preventing means 9 for preventing falling of the screw 4B held by the screw holding portion 7.

The support portion 6, the screw holding portion 7 and the coupling portion 8 are integrally formed by, e.g., machining a thin plate member into a desired shape and bending the plate member at specified points. The constituent material of the support portion 6, the screw holding portion 7 and the coupling portion 8 may be, but is not particularly limited to, e.g., metallic materials such as aluminum and copper or various kinds of resin materials such as polyethylene, polypropylene, polyvinylchloride, polystyrene, polyamide and polyimide.

The support portion 6 is attached to the fixing member 2B by inserting the same into the slide holder 22B and 23B of the fixing member 2B in the manner mentioned above.

The support portion 6 is formed into a thin plate shape. When seen in a plan view, the support portion 6 has a rectangular shape (a generally square shape). The plan-view shape of the support portion 6 is not particularly limited but may be a circular shape, a triangular shape, a pentagonal shape or other polygonal shapes.

The thickness of the support portion 6 may preferably be, but is not limited to, about 0.3 mm to 0.6 mm. This makes it possible to reduce the thickness of the support portion 6 while securing the mechanical strength of the support portion 6. Accordingly, it is possible to reduce the size of the temporary screw holding device 3B.

A through-hole 61 for insertion of the screw 4B is formed in the central area of the support portion 6. The through-hole 61 is positioned so that it can overlap with the through-hole 21B of the fixing member 2B when the position of the support portion 6 is decided with respect to the fixing member 2B by means of the positioning means 10. The shape and size of the through-hole 61 is not particularly limited insofar as the shaft of the screw 4B can pass through the through-hole 61. It is preferred that the through-hole 61 be formed into a circular shape having a diameter slightly greater than the outer diameter of the shaft of the screw 4B. This enables the screw 4B to smoothly pass through the through-hole 61. This also makes it difficult for a gap to be formed between the shaft of the screw 4B and the support portion 6, thereby making it possible to strongly screw-fix the fixing member 2B onto the target object 200B.

In the temporary screw holding device 3B, the support portion 6 is inserted into the slide holder 22B and 23B at the opposite side from the coupling portion 8. In order for the support portion 6 to be inserted into the slide holder 22B and 23B with ease, the tip end portion 62 positioned at the insertion direction tip end of the support portion 6 is formed into such a shape that the thickness thereof is gradually decreased toward the tip end (edge part), more specifically such a shape that the upper surface of the support portion 6 (the surface of the support portion 6 facing the screw holding portion 7) is tapered.

The positioning means 10 for deciding the position of the support portion 6 with respect to the fixing member 2B is provided in the support portion 6. This makes it possible to reliably position the temporary screw holding device 3B in a specified position on the fixing member 2B and to maintain such state.

As described above, the positioning means 10 includes the engagement portion 63 formed in the support portion 6. As shown in Fig. 15, the positioning means 10 decides the position of the support portion 6 with respect to the fixing member 2B by bringing the engagement portion 63 into engagement with the protrusion 24B of the fixing member 2B in a state that the support portion 6 is inserted into the slide holder 22B and 23B. As mentioned above, the hole 61 overlaps with the through-hole 21B when the position of the support portion 6 is decided with respect to the fixing member 2B by means of the positioning means 10.

With the positioning means 10 of this configuration, it is possible to reliably decide the position of the support portion 6 with respect to the fixing member 2B through the use of a simple configuration. In place of the engagement portion 63 employed in the present embodiment, the positioning means 10 may include a recessed portion opened toward the lower surface of the support portion 6 (the surface of the support portion 6 facing the fixing member 2B) so that the recessed portion can engage with the protrusion 24B.

The screw holding portion 7 serves to hold the screw 4B in place. The screw holding portion 7 is formed into a thin plate shape. The screw holding portion 7 is arranged in a generally-parallel opposing relationship with the support portion 6 through a space left therebetween.

The plan-view shape of the screw holding portion 7 is not particularly limited but may preferably be such a shape that the screw holding portion 7 does not make contact with the slide holder 22B and 23B when the screw-fixing of the fixing member 2B to the target object 200B is completed as shown in Fig. 16 (namely, when the screw 4B is tightened). In the present embodiment, the screw holding portion 7 is formed to have a generally rectangular plan-view shape so that the screw holding portion 7 does not make contact with the slide holder 22B and 23B when the screw-fixing of the fixing member 2B to the target object 200B is completed. The plan-view shape of the screw holding portion 7 is not limited to the rectangular shape but may be a circular shape, a triangular shape, a pentagonal shape or other polygonal shapes.

The thickness of the screw holding portion 7 may preferably be, but is not limited to, about 0.3 mm to 0.6 mm. This makes it possible to reduce the thickness of the screw holding portion 7 while securing the mechanical strength of the screw holding portion 7. Accordingly, it is possible to further reduce the size of the temporary screw holding device 3B.

As shown in Fig. 14, a through-hole 71 for insertion of the screw 4B is formed in the central area of the screw holding portion 7. The through-hole 71 is formed into a circular shape to have a diameter slightly greater than the outer diameter of the shaft of the screw 4B but smaller than the outer diameter of the head of the screw 4B. The screw holding portion 7 holds the screw 4B in place in a state that the shaft of the screw 4B is inserted through the through-hole 71. With this configuration, the screw 4B is held in place upon merely inserting the screw 4B through the through-hole 71. This helps simplify the work of holding the screw 4B in the screw holding portion 7.

The spaced-apart distance between the screw holding portion 7 and the support portion 6 is not particularly limited and can be properly set depending on the length of the shaft of the screw 4B to be held in the screw holding portion 7. Preferably, the spaced-apart distance between the screw holding portion 7 and the support portion 6 is set a little shorter than the length of the shaft of the screw B. This makes it possible to keep the tip end portion of the shaft of the screw 4B passing through the through-holes 61 and 21B when the screw 4B is held by the screw holding portion 7 as shown in Fig. 15. Accordingly, it is possible to further enhance the efficiency of the screw-fixing work.

The falling preventing means 9 for preventing falling of the screw 4B from the screw holding portion 7 is provided in the screw holding portion 7. Provision of such falling preventing means 9 makes it possible to prevent any inadvertent falling of the screw 4B from the screw holding portion 7, thereby further enhancing the work efficiency.

The falling preventing means 9 includes four protrusions 91, 92, 93 and 94 protruding from the side surface (edge part) of the through-hole 71 toward the center thereof. The protrusions 91, 92, 93 and 94 are arranged along the circumferential direction of the through-hole 71 at a regular interval. The protrusions 91, 92, 93 and 94 are integrally formed with the screw holding portion 7. The number of the protrusions 91, 92, 93 and 94 is not limited to four as in the present embodiment but may be one through three or five or more. In case of providing a plurality of protrusions, they may be arranged along the circumferential direction of the through-hole 71 at a regular interval.

In the falling preventing means 9 of this configuration, the protrusions 91, 92, 93 and 94 get into the thread grooves of the screw 4B (the valleys between the adjoining thread ridges), thereby preventing the screw 4B from just falling off from the through-hole 71. It is preferred that the tip ends of the protrusions 91, 92, 93 and 94 be positioned between the bottoms of the thread grooves and the apexes of the thread ridges when the shaft of the screw 4B is aligned with the center axis of the through-hole 71. In other words, it is preferred that the protrusions 91, 92, 93 and 94B do not make contact with the bottoms of the thread grooves. This means that the screw 4B and the protrusions 91, 92, 93 and 94 do not come into full thread coupling, which makes it possible to easily insert the screw 4B into the through-hole 71.

The coupling portion 8 interconnects the support portion 6 and the screw holding portion 7. The screw holding portion 7 is cantilevered to the support portion 6 through the coupling portion 8. More specifically, the coupling portion 8 of the present embodiment is formed to interconnect one side of the support portion 6 and a corresponding side of the screw holding portion 7. With the configuration in which the screw holding portion 7 is cantilevered to the support portion 6 through the coupling portion 8, it is possible to further reduce the size of the temporary screw holding device 3B.

The coupling portion 8 is bent outwards from the space (region) S between the support portion 6 and the screw holding portion 7 and is formed into a generally wedge shape. The coupling portion 8 having such a shape is easily deformable. If the screw 4B is tightened to cause the screw holding portion 7 to move toward the support portion 6, the coupling portion 8 is collapsed and deformed so that it can protrude outwards from the space S. Since the coupling portion 8 is easily deformable as mentioned above, it is possible to perform the screw-fixing work of the fixing member 2B to the target object 200B easily.

If the screw 4B is tightened into the threaded hole 210B of the fixing member 2B with a tool such as a screwdriver, the screw holding portion 7 is pressed by the head of the screw 4B and moved toward the support portion 6. When the screw 4B is completely tightened, the screw holding portion 7 makes contact with the support portion 6 as shown in Fig. 16.

Referring to Fig. 16, the coupling portion 8 is deformed by the displacement of the screw holding portion 7 so that it can be double-folded in the bend portion 81, namely so that the first extension portion 82 extending from the bend portion 81 to the screw holding portion 7 can overlap with the second extension portion 83 extending from the bend portion 81 to the support portion 6.

In the temporary screw holding device 3B of the present embodiment, the coupling portion 8 is formed into such a shape that it can remain bent outwards from the space S in a natural state. Therefore, if the screw holding portion 7 is displaced by tightening the screw 4B, the coupling portion 8 is reliably deformed to protrude outwards from the space S. Since nothing exists between the screw holding portion 7 and the support portion 6, it is possible to bring the screw holding portion 7 into contact (surface-to-surface contact) with the support portion 6 by tightening the screw 4B. As a result, it is possible to screw-fix the fixing member 2B to the target object 200B with a strong tightening force as compared with the prior art example in which a gap is left between the screw holding portion 7 and the support portion 6.

In this regard, the inclination of the first extension portion 82 and the second extension portion 83 with respect to the plane parallel to the support portion 6 and the screw holding portion 7 (namely, the angles θ1 and θ2 in Fig. 15) is not particularly limited but may be preferably about 30° to 70°, more preferably about 40° to 50° and even more preferably about 45°. If the angles θ1 and θ2 are smaller than the lower limit values noted above, it is sometimes the case that, depending on the strength and size (length) of the coupling portion 8, bending occurs in other portions than the bend portion 81 or double-folded deformation of the coupling portion 8 does not occur in the tidy manner mentioned above. In contrast, if the angles θ1 and θ2 are greater than the upper limit values noted above, it is likely that, depending on the length of the coupling portion 8 (the spaced-apart distance between the screw holding portion 7 and the support portion 6), the coupling portion 8 may excessively protrude outwards from the space S, consequently increasing the size of the temporary screw holding device 3B. By ensuring that the angles θ1 and θ2 fall within the numerical value ranges noted above, it is possible to reliably deform the coupling portion 8 into a desired shape while restraining any increase in the size of the temporary screw holding device 3B.

As can be seen in Figs. 16A and 16B, the coupling portion 8 of the present embodiment is inclined with respect to the major surfaces of the support portion 6 so that, when the screw-fixing work comes to an end, the bend portion 81 can be positioned above the opposite end portions of the coupling portion 8 (namely, the end portion 84 connected to the screw holding portion 7 and the end portion 85 connected to the support portion 6). By allowing the coupling portion 8 to be deformed in this manner, it is possible to prevent the coupling portion 8 from making contact with the fixing member 2B during deformation. In a hypothetical case that, contrary to the present embodiment, the coupling portion 8 would be deformed to extend obliquely downwards, it is likely that, depending on the strength and size of the coupling portion 8, the coupling portion 8 may make contact with the fixing member 2B, thereby restraining movement of the screw holding portion 7, hindering a smooth screw-fixing work and unwillingly breaking the coupling portion 8.

In the temporary screw holding device 3B of the present embodiment, the coupling portion 8 is deformed in the manner described above. For this purpose, the shape of the coupling portion 8 is designed as follows.

First, the length L1 of the first extension portion 82 extending from the bend portion (a tip of the wedge shape bend portion) 81 to the screw holding portion 7 is set shorter than the length L2 of the second extension portion 83 extending from the bend portion (a tip of the wedge shape bend portion) 81 to the support portion 6. The difference between L1 and L2 is not particularly limited but may preferably be equal to, e.g., the thickness of the support portion 6. Secondly, the end portion 84 of the first extension portion 82 connected to the screw holding portion 7 is deviated toward the space S (to the right in Fig. 15) from the end portion 85 of the second extension portion 83 connected to the support portion 6. The transverse deviation width of the end portions 84 and 85 in Fig. 15 is not particularly limited but may preferably be equal to, e.g., the thickness of the coupling portion 8. By designing the coupling portion 8 in this manner, a force pulling the second extension portion 83 toward the first extension portion 82 can be applied to the second extension portion 83. This makes it possible to deform the coupling portion 8 to extend obliquely upwards when the screw 4B is fully tightened as described above.

While the first and second design items are all employed in the present embodiment, the same effects as mentioned above can be attained by employing only one of the first and second design items.

If the difference between L1 and L2 and the deviation width of the end portions 84 and 85 are set greater than the values noted above, it is possible to deform the coupling portion 8 so that it can be substantially upright with respect to the fixing member 2B as shown in Fig. 17. In this case, it becomes possible to reduce the plan-view area occupied by the temporary screw holding device 3B after finishing the screw-fixing work.

While the temporary screw holding device 3B of the third embodiment has been described above, it is possible to distribute the temporary screw holding device 3B as a screw-fixing member assembly in which the temporary screw holding device 3B is attached to the fixing member 2B with the screw 4B held in the temporary screw holding device 3B. This makes it possible to directly attach the object 300B to a target object 200B at a manufacturing site such as a factory or the like.

### <Fourth Embodiment>

Next, description will be made on a fourth embodiment of the temporary screw holding device according to the present invention.

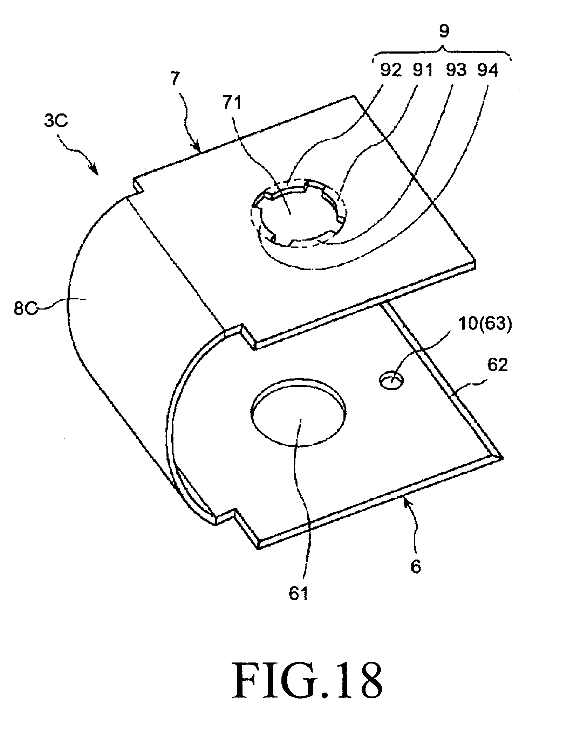

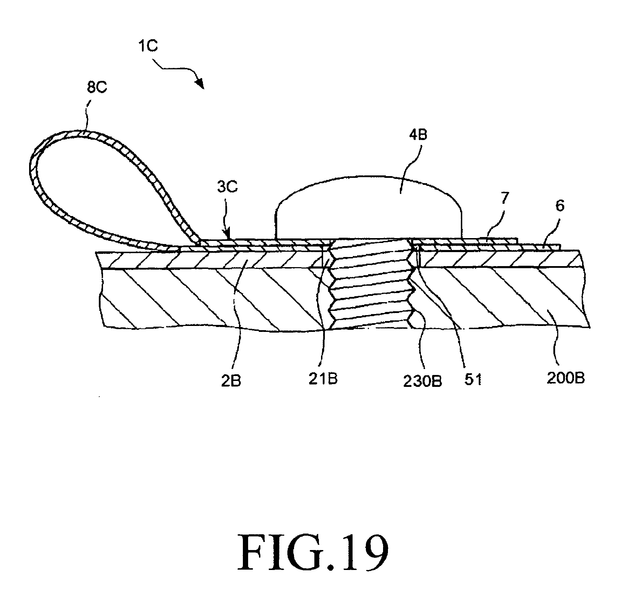

Fig. 18 is a perspective view of a temporary screw holding device according to the fourth embodiment of the present invention. Fig. 19 is a cross-sectional view of the temporary screw holding device shown in Fig. 18 which shows a state that the screw is tightened into a threaded hole of the target object.

The description on the fourth embodiment made below will be centered on the points differing from the third embodiment. No description will be made on the same points.

The temporary screw holding device 3C of the present embodiment is the same as the temporary screw holding device 3B of the third embodiment except the shape and physical properties of the coupling portion 8C. The same components as those of the third embodiment will be designated by like reference symbols.

Referring to Fig. 18, the coupling portion 8C of the temporary screw holding device 3C is curved or bulged outwards from the space S. The coupling portion 8C has a radius of curvature substantially constant along the extension direction thereof.

The coupling portion 8C is elastically deformable. In the state that the screw-fixing work of the fixing member 2B to the target object 200B using the screw 4B is completed with the screw holding portion 7 making contact with the support portion 6, a force biasing the coupling portion 8C into a natural state (namely, a state in which the screw holding portion 7 and the support portion 6 are spaced apart from each other) is generated in the deformed coupling portion 8C. Under the action of this force, the screw holding portion 7 is pressed against the head of the screw 4B and the support portion 6 is pressed against the fixing member 2B. This makes it possible to prevent the screw 4B from being loosened over time.

If the tightened screw 4B is removed, the coupling portion 8C is returned back to the natural state, thereby restoring the temporary screw holding device 3C to the original shape. This means that the temporary screw holding device 3C of the present embodiment is reusable.

The constituent material of the coupling portion 8C is not particularly limited as long as it is elastically deformable. Examples of the constituent material of the coupling portion 8C include: various kinds of rubber materials (particularly, vulcanized ones) such as natural rubber, isoprene rubber, butadiene rubber, styrene-butadiene rubber, nitrile rubber, chloroprene rubber, butyl rubber, acryl rubber, ethylene-propylene rubber, hydrin rubber, urethane rubber, silicon rubber and fluoro-rubber; various kinds of thermoplastic elastomer such as styrene-based elastomer, polyolefin-based elastomer, polyvinylchloride-based elastomer, polyurethane-based elastomer, polyester-based elastomer, polyamide-based elastomer, polybutadiene-based elastomer, trans-polyisoprene-based elastomer, fluoro-rubber-based elastomer and chlorinated polyethylene-based elastomer; and super-elastic alloy such as Ni-Ti alloy, Cu-Zn alloy and Ni-Al alloy.

In the present embodiment, the coupling portion 8C is formed independently of the screw holding portion 7 and the support portion 6 and then bonded to the screw holding portion 7 and the support portion 6 by various kinds of bonding methods such as welding and the like.

While certain temporary screw holding devices of the present invention have been described above based on the embodiments shown in the drawings, the present invention is not limited thereto. For example, the respective components of the temporary screw holding devices of the present invention may be substituted by arbitrary components having equivalent functions or may be added with other arbitrary components.

While the coupling portion of the third embodiment described above includes a single bend portion, the number of the bend portion is not particularly limited but may be plural.

## Claims

1. A fixing device (1) for fixing an object (300) onto a target object (200) having an opening (210), comprising:
a fixing member (2) formed from a plate-shaped member having a through-hole (21), the object (300) being provided on the fixing member (2);
a fastening member (3) for fixing the fixing member (2) with the object (300) onto the target object (200), the fastening member (3) comprising a pair of leg portions (31, 32) which are engaged at respective one ends thereof with the fixing member (2); and
a screw (4) which rotatably passes through the through-hole (21) of the fixing member (2),
**characterized in that**
the fastening member (3) further comprises a connecting portion (33) which connects the other ends of the leg portions together and in which a threaded hole (331a) is formed, and at least one projecting portion (34, 35, 36, 37) projecting outwardly with respect to the connecting portion (33) toward the fixing member (2),
the screw (4) is adapted to be threaded into the thread hole (331a) of the fastening member (3), and
when the screw (4) is rotated to be threaded into the threaded hole (331a) in a state that the fixing member (2) is positioned on one surface of the target object (200) and the fastening member (3) is positioned on the other surface of the target object (200) through the opening (210) of the target object (200), the fastening member (3) is displaced according to the rotation of the screw (4) so that the projecting portion (34, 35, 36, 37) makes abutment with the other surface of the target object (200) so as to hold the target object (200) between the projecting portion (34, 35, 36, 37) of the fastening member (3) and the fixing member (2), thereby fixing the object (300) onto the target object (200) through the fixing member (2).

2. The fixing device (1) as claimed in claim 1, wherein the projection portion (34, 35, 36, 37) engages a part of the other surface of the target object (200) near an edge of the opening (210) in a state that the target object (200) is held between the projecting portion (34, 35, 36, 37) of the fastening member (3) and the fixing member (2).

3. The fixing device (1) as claimed in claim 1 or 2, wherein the at least one projecting portion (34, 35, 36, 37) includes two pairs of projecting portions (34, 35, 36, 37), and each pair of projecting portions (34, 35, 36, 37) is provided at each end of the connecting portion (33).

4. The fixing device (1) as claimed in any one of claims 1 to 3, wherein the fixing member (2) includes a pair of cutout portions (22, 23) formed in the plate-shaped member at the opposite sides of the through-hole (21), and the pair of leg portions (31, 32) are slidably displaced within the cutout portions (22, 23), respectively.

5. The fixing device (1) as claimed in any one of claims 1 to 4, wherein the connecting portion (33) includes a threaded portion (331) in which the threaded hole (331a) is formed and a pair of tapered portions (332, 333) which are coupled to the leg portions (38, 39) and both sides of the threaded portion (331), respectively, wherein the tapered portions (332, 333) are inclined so that a distance therebetween decreases far away from the fixing member (2).

6. The fixing device (1) as claimed in any one of claims 1 to 5, wherein the fastening member (3) includes a pair of shoulder portions (38, 39) which are coupled to the one ends of the leg portions (31, 32), respectively, so as to engage with the fixing member (2) for preventing the fastening member (3) from being fallen off from the fixing member (2) when the screw (4) is threaded off from the threaded hole (331a).

7. The fixing device (1) as claimed in any one of claims 1 to 6, wherein the fastening member (3) is formed by bending and/or folding a single metal plate member.

8. The fixing device (1) as claimed in any one of claims 1 to 7, further comprising a displacement preventing means (5) for preventing the screw (4) from being displaced with respect to the fixing member (2) in an axial direction of the screw (4).

9. The fixing device (1) as claimed in claim 8, wherein the displacement preventing means (5) includes a clamp member secured around the screw (4) in such a manner that the fixing member (2) is sandwiched between a screw head of the screw (4) and the clamp member.

## Patentansprüche

1. Fixiervorrichtung (1) zum Fixieren eines Gegenstands (300) an einem Zielgegenstand (200) mit einer Öffnung (210), wobei die Vorrichtung Folgendes umfasst:
ein Fixierelement (2), das aus einem plattenförmigen Element mit einem Durchgangsloch (21) gebildet ist, wobei der Gegenstand (300) an dem Fixierelement (2) vorgesehen ist;
ein Befestigungselement (3) zum Fixieren des Fixierelements (2) mit dem Gegenstand (300) an dem Zielgegenstand (200), wobei das Befestigungselement (3) ein Paar Schenkelabschnitte (31, 32) umfasst, die an jeweiligen Enden davon in das Fixierelement (2) eingreifen; und
eine Schraube (4), die drehbar durch das Durchgangsloch (21) des Fixierelements (2) verläuft,
**dadurch gekennzeichnet, dass**
das Befestigungselement (3) weiterhin einen Verbindungsabschnitt (33), der die anderen Enden der Schenkelabschnitte miteinander verbindet und in dem ein Gewindeloch (331a) ausgebildet ist, sowie mindestens einen vorspringenden Abschnitt (34, 35, 36, 37) umfasst, der im Verhältnis zum Verbindungsabschnitt (33) hin zum Befestigungselement (2) nach außen vorspringt,
die Schraube (4) so ausgebildet ist, dass sie in das Gewindeloch (331a) des Befestigungselements (3) eingeschraubt werden kann, und dass,
wenn die Schraube (4) gedreht wird, um sie in das Gewindeloch (331a) in einem solchen Zustand einzuschrauben, dass das Fixierelement (2) an einer Oberfläche des Zielgegenstands (200) und das Befestigungselement (3) an der anderen Oberfläche des Zielgegenstands (200) durch die Öffnung (210) des Zielgegenstands (200) positioniert ist, das Befestigungselement (3) entsprechend der Drehung der Schraube (4) so versetzt wird, dass der vorspringende Abschnitt (34, 35, 36, 37) an die andere Oberfläche des Zielgegenstands (200) angrenzt, um so den Zielgegenstand (200) zwischen dem vorspringenden Abschnitt (34, 35, 36, 37) des Befestigungselements (3) und dem Fixierelement (2) zu halten, so dass dadurch der Gegenstand (300) an dem Zielgegenstand (200) durch das Fixierelement (2) fixiert ist.

2. Fixiervorrichtung (1) nach Anspruch 1, bei der der vorspringende Abschnitt (34, 35, 36, 37) in einen Teil der anderen Oberfläche des Zielgegenstands (200) nahe einer Kante der Öffnung (210) in einem solchen Zustand eingreift, dass der Zielgegenstand (200) zwischen dem vorspringenden Abschnitt (34, 35, 36, 37) des Befestigungselements (3) und dem Fixierelement (2) gehalten wird.

3. Fixiervorrichtung (1) nach Anspruch 1 oder 2, bei der der mindestens eine vorspringende Abschnitt (34, 35, 36, 37) zwei Paar vorspringende Abschnitte (34, 35, 36, 37) beinhaltet, und wobei jedes Paar von vorspringenden Abschnitten (34, 35, 36, 37) an jedem Ende des Verbindungsabschnitts (33) vorgesehen ist.

4. Fixiervorrichtung (1) nach einem der Ansprüche 1 bis 3, bei der das Fixierelement (2) ein Paar Ausschnittabschnitte (22, 23) beinhaltet, die im plattenförmigen Element an den gegenüberliegenden Seiten des Durchgangslochs (21) ausgebildet sind, wobei das Paar Schenkelabschnitte (31, 32) innerhalb der Ausschnittabschnitte (22 bzw. 23) gleitend versetzt wird.

5. Fixiervorrichtung (1) nach einem der Ansprüche 1 bis 4, bei der der Verbindungsabschnitt (33) einen Gewindeabschnitt (331), in dem das Gewindeloch (331a) ausgebildet ist, sowie ein Paar konische Abschnitte (332, 333) beinhaltet, die mit den Schenkelabschnitten (38, 39) bzw. mit beiden Seiten des Gewindeabschnitts (331) gekoppelt sind, wobei die konischen Abschnitte (332, 333) geneigt sind, so dass eine dazwischenliegende Distanz weit weg vom Fixierelement (2) abnimmt.

6. Fixiervorrichtung (1) nach einem der Ansprüche 1 bis 5, bei der das Befestigungselement (3) ein Paar Schulterabschnitte (38, 39) beinhaltet, die mit den einen Enden der Schenkelabschnitte (31 bzw. 32) gekoppelt sind, um so in das Fixierelement (2) einzugreifen, so dass ein Abfallen des Befestigungselements (3) vom Fixierelement (2) verhindert wird, wenn die Schraube (4) aus dem Gewindeloch (331a) herausgeschraubt wird.

7. Fixiervorrichtung (1) nach einem der Ansprüche 1 bis 6, bei der das Befestigungselement (3) durch Biegen und/oder Falten eines einzelnen Metallplattenelements gebildet ist.

8. Fixiervorrichtung (1) nach einem der Ansprüche 1 bis 7, die weiterhin ein versetzungsverhinderndes Mittel (5) umfasst, um ein Versetzen der Schraube (4) im Verhältnis zum Fixierelement (2) in einer axialen Richtung der Schraube (4) zu verhindern.

9. Fixiervorrichtung (1) nach Anspruch 8, bei der das versetzungsverhindernde Mittel (5) ein Klemmelement beinhaltet, das um die Schraube (4) herum in einer solchen Weise gesichert ist, dass sich das Fixierelement (2) zwischen einem Schraubenkopf der Schraube (4) und dem Klemmelement befindet.

## Revendications

1. Dispositif de fixation (1) pour fixer un objet (300) sur un objet cible (200) comportant une ouverture (210), comprenant :
un élément de fixation (2) formé à partir d'un élément en forme de plaque comportant un trou traversant (21), l'objet (300) étant placé sur l'élément de fixation (2) ;
un élément d'attache (3) pour fixer l'élément de fixation (2) avec l'objet (300) sur l'objet cible (200), l'élément d'attache (3) comprenant une paire de parties formant pattes (31, 32) qui sont en prise au niveau de leurs extrémités respectives avec l'élément de fixation (2) ; et
une vis (4) qui passe de manière rotative à travers le trou traversant (21) de l'élément de fixation (2),
**caractérisé en ce que**
l'élément d'attache (3) comprend en outre une partie de liaison (33) qui relie les autres extrémités des parties formant pattes les unes aux autres et dans laquelle est formé un trou fileté (331a), et au moins une partie formant saillie (34, 35, 36, 37) faisant saillie vers l'extérieur par rapport à la partie de liaison (33) vers l'élément de fixation (2),
la vis (4) est conçue pour être vissée dans le trou fileté (331a) de l'élément d'attache (3), et
lorsque la vis (4) est tournée pour être vissée dans le trou fileté (331a) dans un état où l'élément de fixation (2) est positionné sur une surface de l'objet cible (200) et où l'élément d'attache (3) est positionné sur l'autre surface de l'objet cible (200) à travers l'ouverture (210) de l'objet cible (200), l'élément d'attache (3) est déplacé en fonction de la rotation de la vis (4) de telle sorte que la partie formant saillie (34, 35, 36, 37) vienne en butée contre l'autre surface de l'objet cible (200) afin de maintenir l'objet cible (200) entre la partie formant saillie (34, 35, 36, 37) de l'élément d'attache (3) et l'élément de fixation (2), fixant ainsi l'objet (300) sur l'objet cible (200) par le biais de l'élément de fixation (2).

2. Dispositif de fixation (1) selon la revendication 1, dans lequel la partie formant saillie (34, 35, 36, 37) se met en prise avec une partie de l'autre surface de l'objet cible (200) près d'un bord de l'ouverture (210) dans un état où l'objet cible (200) est maintenu entre la partie formant saillie (34, 35, 36, 37) de l'élément d'attache (3) et l'élément de fixation (2).

3. Dispositif de fixation (1) selon la revendication 1 ou 2, dans lequel l'au moins une partie formant saillie (34, 35, 36, 37) comprend deux paires de parties formant saillies (34, 35, 36, 37) et chaque paire de parties formant saillies (34, 35, 36, 37) est placée à chaque extrémité de la partie de liaison (33).

4. Dispositif de fixation (1) selon l'une quelconque des revendications 1 à 3, dans lequel l'élément de fixation (2) comprend une paire de parties formant découpes (22, 23) formées dans l'élément en forme de plaque au niveau des côtés opposés du trou traversant (21) et la paire de parties formant pattes (31, 32) sont déplacées respectivement de façon coulissante à l'intérieur des parties formant découpes (22, 23).

5. Dispositif de fixation (1) selon l'une quelconque des revendications 1 à 4, dans lequel la partie de liaison (33) comprend une partie filetée (331) dans laquelle est formé le trou fileté (331a) et une paire de parties coniques (332, 333) qui sont couplées respectivement aux parties formant pattes (38, 39) et aux deux côtés de la partie filetée (331), dans lequel les parties coniques (332, 333) sont inclinées de telle sorte qu'une distance entre elles diminue à distance de l'élément de fixation (2).

6. Dispositif de fixation (1) selon l'une quelconque des revendications 1 à 5, dans lequel l'élément d'attache (3) comprend une paire de parties formant épaulements (38, 39) qui sont couplées respectivement aux extrémités des parties formant pattes (31, 32), afin de se mettre en prise avec l'élément de fixation (2) pour empêcher l'élément d'attache (3) de se détacher de l'élément de fixation (2) lorsque la vis (4) est dévissée du trou fileté (331a).

7. Dispositif de fixation (1) selon l'une quelconque des revendications 1 à 6, dans lequel l'élément d'attache (3) est formé en courbant et/ou pliant un élément de plaque métallique simple.

8. Dispositif de fixation (1) selon l'une quelconque des revendications 1 à 7, comprenant en outre des moyens empêchant le déplacement (5) pour empêcher la vis (4) d'être déplacée par rapport à l'élément de fixation (2) dans une direction axiale de la vis (4).

9. Dispositif de fixation (1) selon la revendication 8, dans lequel les moyens empêchant le déplacement (5) comprennent un élément de serrage immobilisé autour de la vis (4) de telle manière que l'élément de fixation (2) soit pris en sandwich entre une tête de vis de la vis (4) et l'élément de serrage.
